# EUROPEAN PATENT SPECIFICATION

(11) **EP 2 428 469 B1**
(45) Date of publication and mention of the grant of the patent: **27.03.2013**
(21) Application number: 11180468.8
(22) Date of filing: 07.09.2011
(51) Int. Cl.: B65G 17/40

(54) **Module for modular belt conveyor, with improved means for connecting additional members**
Fördermodul, für ein Modularkettenförderer, mit verbesserten Mitteln zur Verbindung zusätzlicher Elemente
Module pour un transporteur à chaine modulaire, doté d'un élément amélioré pour la connexion d'éléments supplémentaires

(30) Priority: 10.09.2010 IT MI20101647
(43) Date of publication of application: 14.03.2012
(73) Proprietor: System Plast S.r.l., 24060 Telgate (BG) (IT)
(72) Inventor: Van der HOEVEN, Ted, 2678 TT De Lier (NL); Memoli, Andrea, 24064 GRUMELLO DEL MONTE (BG) (IT)
(74) Representative: Ripamonti, Enrico

(56) References cited:
- DE-U1- 20 104 371
- US-A- 4 925 013
- US-A1- 2004 238 329

## Description

The present invention relates to a kit comprising a module for a conveyor formed by connecting together a plurality of said modules and means for removably connecting additional member to the module in accordance with the pre-characterising part of the main claim.

Modules of the aforedescribed type have been known for some time and they are described for example in document US 2004/238329, which discloses a kit according to the preamble of claim 1. For certain applications, for example in the mechanical field, these conveyors present spaced-apart additional members, for example thrust bars, removably connected to the upper surface of the modules, and suitably spaced apart. Modules presenting said thrust bars are known by the expert of the art to be subject to greater wear hence, after a certain period of conveyor use, the thrust bars are moved onto other modules not previously associated with said thrust bars in order to prevent excessive deterioration of these bars. The operations required to connect the additional members to the modules are relatively lengthy and complicated.

An object of the present invention is to provide a kit comprising a module which overcomes the above drawbacks by facilitating and simplifying the operations required to connect to the module an additional member, for example a thrust bar, while at the same time enabling modules to be formed which are lighter and use less material than traditional modules.

This and other objects which will be apparent to an expert of the art are attained by the kit of claim 1 and the method of claim 8.

Further embodiments of the invention are described in the dependent claims.

The invention will be better understood from the accompanying figures, which are provided by way of non-limiting example and in which:
Figure 1 is a perspective view of a module of a kit according to the invention,
Figure 2 is a view of the module from above,
Figure 3 is a view from below,
Figure 4 is an enlarged cross-sectional view taken on the line 3-3 of
Figure 1,

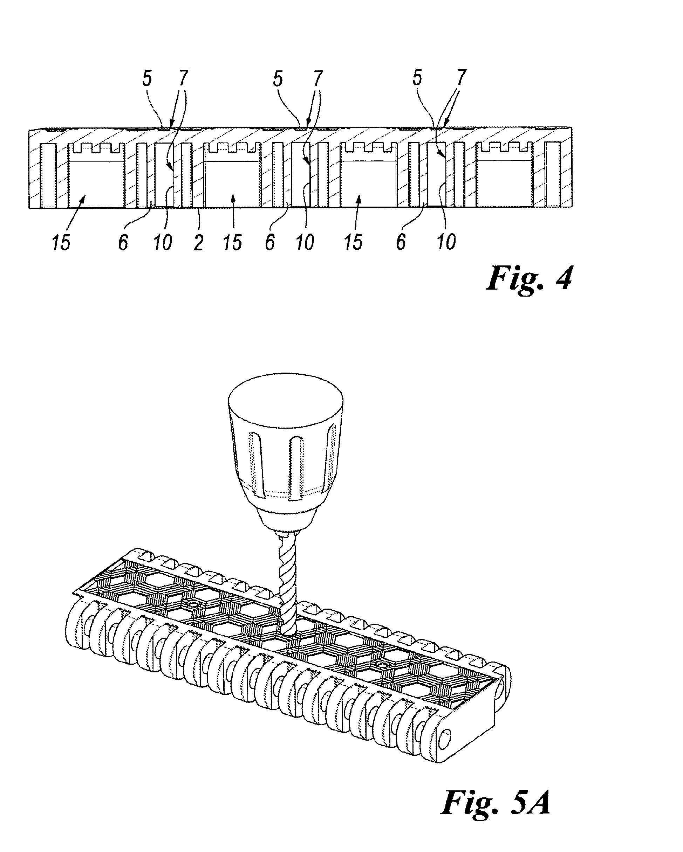

Figures 5A-G are schematic views showing the operations required to connect an additional bar member to the upper surface of the conveyor modules of the kit according to the invention,

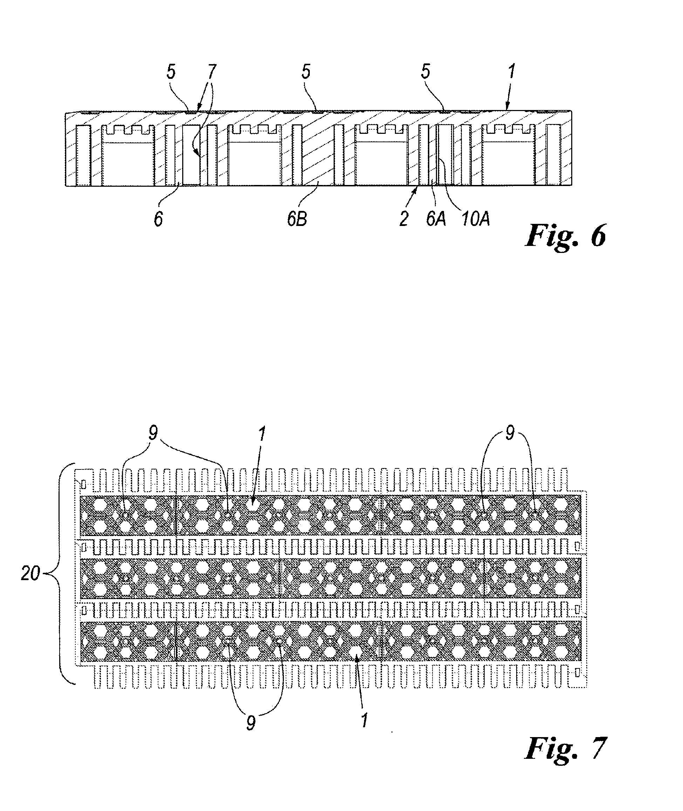

Figure 6 is a sectional view, such as that of Figure 4, of a second embodiment of the module of the kit according to the invention,
Figure 7 shows a portion of a band conveyor formed from a plurality of modules of the kit of the invention, free of additional members.

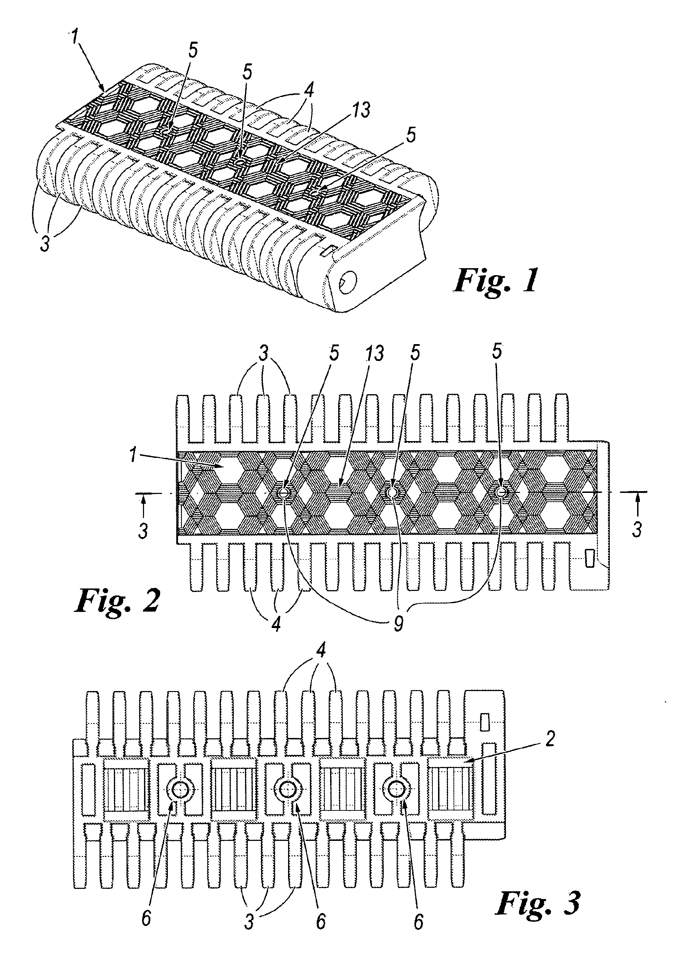

With reference to Figures 1-4, these show a module adapted to form a conveyor, particularly a band conveyor 20 (a portion of which is shown schematically in Figure 7), presenting a plurality of said modules connected together.

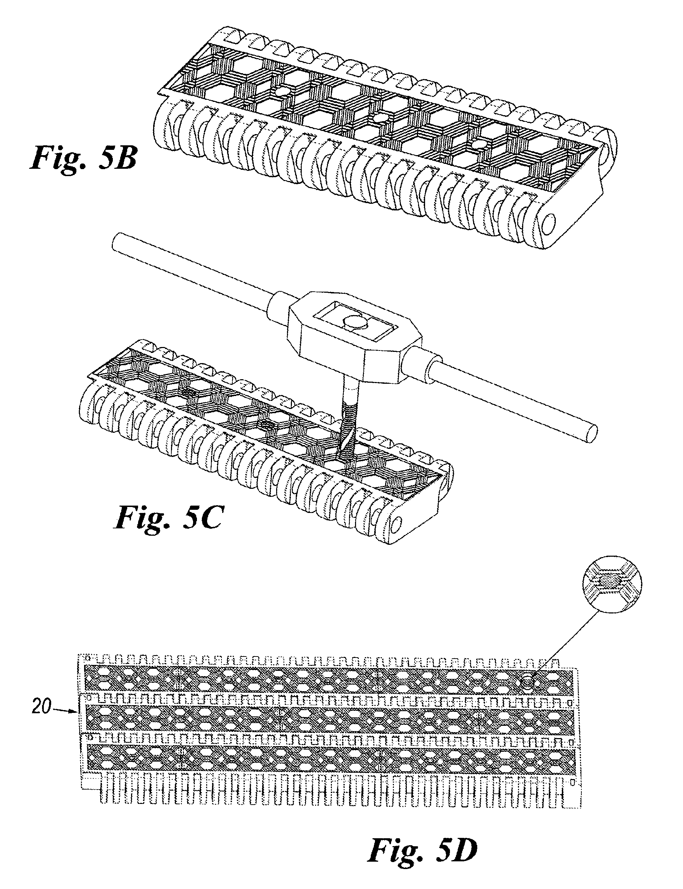

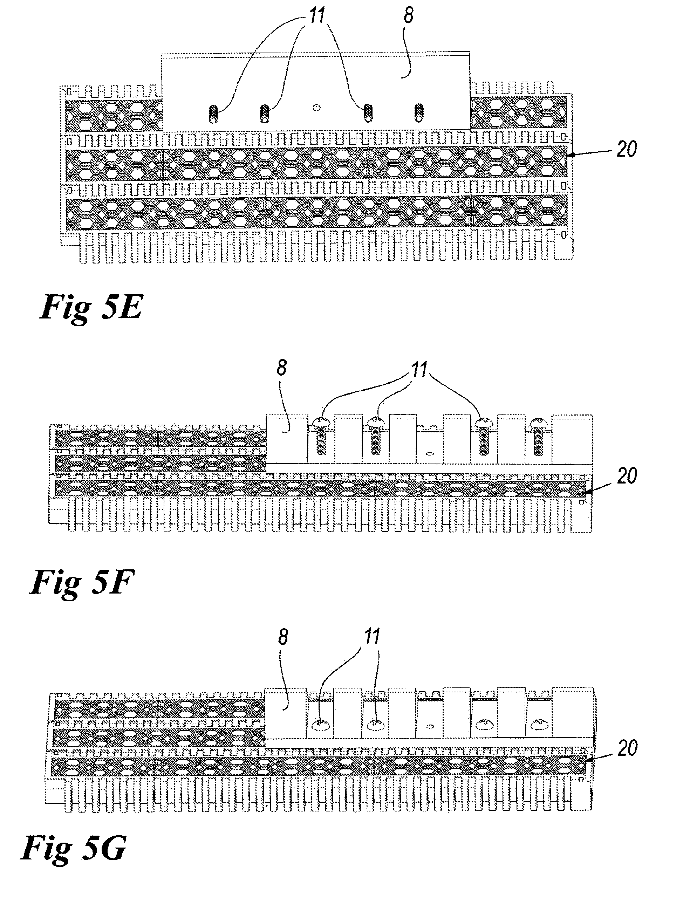

Each module comprises: an upper surface 1, a lower surface 2, conventional elements 3, 4 for removably connecting the modules together to form said conveyor. The kit further comprises and means 7 (Figure 4) for removably connecting additional members 8, particularly a thrust bar, to said upper surface. According to the invention, the connection means 7 comprise, on the upper surface 1 of the module, at least one portion 5 presenting a predefined identification mark 9 (Figure 2). Again according to the invention, the module comprises, below the upper surface 1 in a position corresponding with this predefined mark, a hole 10 or seat defined by a connection element 6, in which means 11 can be engaged (Figure 5) to removably connect said additional member to said upper surface of the module. The hole is advantageously of size M8.

The module upper surface 1 is preferably a continuous surface free of holes or recessed seats for cooperating with the usual means 11 for connecting the additional members 8.

In addition to an optional usual relief knurling 13, the module upper surface 1 presents three portions 5 each provided with a conventional mark 9 in the form of a relief circle.

Immediately below each circle-shaped connection means 9, the module presents a connection element 6, which is preferably of tubular form with a circular cross-section, is open only at the module lower surface 2, and defines a hole 10 closed by the module upper surface 1.

The module of the invention is advantageously provided below the upper surface 1 with a plurality of predefined holes, not visible from the upper surface, but identified on said surface by the marks 9.

According to the invention, as shown in Figure 5, if a thrust bar 8 is to be connected to one or more modules of a band conveyor 20, the upper surface 1of the module is firstly drilled at the predefined marks 9 (Figure 5A) to connect said surface 1 to the underlying holes 10, then the holes 10 are threaded (Figures 5C, 5D). In this manner the thrust bar 8 can be connected to the module in conventional manner, by usual screws which engage in the previously formed threaded holes (Figures 5E-G).

As the modules of the invention present the holes in predetermined positions, clearly indicated on the module upper surface, the operation of connecting a thrust bar to the module is made very simple and rapid. Moreover in the modules of the invention, the bar connection holes are made only if strictly necessary, to hence enable a module upper surface which, where it is not necessary to connect a bar thereto, is substantially continuous and free of holes or recessed seats into which dirt could enter and/or which would make conveyor cleaning more difficult.

According to a first variant of the invention, shown in Figure 6, the hole 10A of the tubular element 6A presents a thread which further simplifies the operations necessary for connecting a bar to the module by reducing them to the mere need to drill the upper surface 1 at the predetermined mark 5.

According to a further variant of the invention, again shown in Figure 6, below the predefined mark 5 an element 6B is provided which is solid rather than bored as previously described, but still enabling a seat, i.e. a threaded hole, to be formed therein for the screws connecting the bar to the module.

The invention is able to limit the quantity of plastic material required to form the module, as the tubular elements 6, 6A or solid elements 6B need to be provided only to correspond with the marks 5, whereas the adjacent zones can be empty (these empty zones being indicated by 15 in Figure 4).

## Claims

1. A kit comprising a module for forming a conveyor, particularly a band conveyor (20), presenting a plurality of said modules connected together, each module comprising: an upper surface 1, a lower surface 2, conventional elements (3, 4) for removably connecting the modules together to form said conveyor, said kit further comprising means (11) for removably connecting additional members (8), particularly a thrust bar, to said upper surface, **characterised in that** the module presents on the exposed face of the upper surface (1) of the module, at least one predefined identification mark (9), the module presenting, below said upper surface (1) in a position corresponding with said at least one predefined mark (9), at least one connection element (6) presenting a hole (10) closed by said upper surface (1) and opened by said lower surface (2), said hole (10) being adapted to cooperate with said means (11), to removably connect said additional member (8) to said upper surface (1) of the module when said upper surface (1) is drilled at said predefined mark (9) for the insertion in said hole (10) said connecting means (11).

2. A kit as claimed in claim 1, **characterised in that** the module upper surface (1) is a continuous surface free of holes or recessed seats for cooperating with the means (11) for connecting the additional members (8).

3. A kit as claimed in claim 1, **characterised in that** the predefined mark (9) is substantially in the form of a circle or a dot.

4. A kit as claimed in claim 1, **characterised in that** the connection element (6) is of tubular form with a circular cross-section, is open only at the module lower surface (2), and defines a hole (10) closed by the module upper surface (1).

5. A kit as claimed in claim 1, **characterised by** comprising below the upper surface (1) a plurality of predefined holes, which are not visible from the upper surface, but are identified on said surface by the marks (9).

6. A kit as claimed in claim 1, **characterised in that** the hole (10) of the connection element (6A) comprises a thread.

7. A kit as claimed in claim 1, **characterised in that** the hole (10) of the connection element (6A) has dimensions M8.

8. A method for removably connecting additional members (8), in particular a thrust bar, to the upper surface (1) of a module claimed in one or more of the preceding claims, the method comprising an initial step in which said module upper surface (1) is drilled at at least one predefined mark (9) provided on the module upper surface (1) until reaching underlying predefined holes (10) defined by an underlying element (6), said hole (10) being adapted to cooperate with the means (11) for removably connecting said additional member to the module.

9. A method as claimed in claim 8, **characterised by** forming a thread in the hole (10) after the drilling step.

## Patentansprüche

1. Einrichtung, umfassend ein Modul zum Ausbilden eines Fördermittels, insbesondere eines Bandfördermittels (20), bestehend aus einer Vielzahl miteinander verbundener Module, wobei jedes Modul umfasst: eine obere Fläche (1), eine untere Fläche (2), konventionelle Elemente (3, 4) zum lösbaren Verbinden der Module zum Ausbilden des Fördermittels, wobei die Einrichtung weiterhin umfasst: Mittel (11) zum lösbaren Verbinden zusätzlicher Elemente (8), insbesondere einer Schubstange, mit der oberen Fläche, **dadurch gekennzeichnet, dass** das Modul im freiliegenden Bereich der oberen Fläche (1) des Moduls mindestens eine vordefinierte Identifikations-Markierung (9) aufweist, wobei das Modul unterhalb der oberen Fläche (1), in einer Position, die mit der mindestens einen vordefinierten Markierung (9) übereinstimmt, mindestens eine Verbindungskomponente (6) mit einem Loch (10) aufweist, das an der oberen Fläche (1) geschlossen und an der unteren Fläche (2) geöffnet ist, wobei das Loch (10) ausgestaltet ist, um mit den Mitteln (11) zusammenzuwirken, um das zusätzliche Element (8) mit der oberen Fläche (1) des Moduls lösbar zu verbinden, wenn an der oberen Fläche (1) an der vordefinierten Markierung (9) gebohrt ist, um die Verbindungsmittel (11) in das Loch (10) einzuführen.

2. Einrichtung nach Anspruch 1, **dadurch gekennzeichnet, dass** die obere Fläche (1) des Moduls eine durchgängige Fläche ohne Löcher oder ausgesparte Aufnahmen ist, um mit den Mitteln (11) zum Verbinden der zusätzlichen Elemente (8) zusammenzuwirken.

3. Einrichtung nach Anspruch 1, **dadurch gekennzeichnet, dass** die vordefinierte Markierung (9) im Wesentlichen die Form eines Kreises oder Punkts aufweist.

4. Einrichtung nach Anspruch 1, **dadurch gekennzeichnet, dass** die Verbindungskomponente (6) rohrförmig mit kreisförmigem Querschnitt ist, nur an der unteren Fläche (2) des Moduls offen ist, und ein Loch (10) darstellt, das durch die obere Fläche (1) des Moduls geschlossen ist.

5. Einrichtung nach Anspruch 1, **dadurch gekennzeichnet, dass** unterhalb der oberen Fläche (1) eine Vielzahl vordefinierter Löcher vorhanden ist, die an der oberen Fläche nicht sichtbar, aber auf der Fläche durch die Markierungen (9) gekennzeichnet sind.

6. Einrichtung nach Anspruch 1, **dadurch gekennzeichnet, dass** das Loch (10) der Verbindungskomponente (6A) ein Gewinde aufweist.

7. Einrichtung nach Anspruch 1, **dadurch gekennzeichnet, dass** das Loch (10) der Verbindungskomponente (6A) die Abmessung M8 aufweist.

8. Verfahren zum lösbaren Verbinden zusätzlicher Elemente (8), insbesondere einer Schubstange, mit der oberen Fläche (1) eines Moduls nach einem oder mehreren der vorhergehenden Ansprüche, wobei das Verfahren umfasst: einen anfänglichen Schritt, in dem an der oberen Fläche (1) des Moduls an mindestens einer vorgegebenen Markierung (9) auf der oberen Fläche (1) des Moduls gebohrt wird, bis die darunterliegenden vordefinierten, von einer darunterliegenden Komponente (6) definierten Bohrungen (10) erreicht werden, wobei das Loch (10) ausgestaltet ist, um mit den Mitteln (11) zur lösbaren Verbindung des zusätzlichen Elements mit dem Modul zusammenzuwirken.

9. Verfahren nach Anspruch 8, **dadurch gekennzeichnet, dass** nach dem Schritt des Bohrens in dem Loch (10) ein Gewinde ausgebildet wird.

## Revendications

1. Kit comprenant un module pour former un convoyeur, en particulier un convoyeur à bande (20), présentant une pluralité desdits modules reliés entre eux, chaque module comprenant : une surface supérieure 1, une surface inférieure 2, des éléments classiques (3, 4) pour connecter ensemble de manière amovible les modules afin de former ledit convoyeur, ledit kit comprenant en outre des moyens (11) pour connecter de manière amovible des éléments supplémentaires (8), en particulier une barre de poussée, à ladite surface supérieure, **caractérisé en ce que** le module présente sur la face exposée de la surface supérieure (1) du module, au moins une marque d'identification prédéterminée (9), le module présentant, au-dessous de ladite surface supérieure (1) dans une position correspondant à ladite au moins une marque prédéfinie (9), au moins un élément de connexion (6) présentant un trou (10) fermé du côté de ladite surface supérieure (1) et ouverte du côté de ladite surface inférieure (2), ledit trou (10) étant adapté pour coopérer avec lesdits moyens (11) destinés à connecter de manière amovible, ledit élément supplémentaire (8) à ladite surface supérieure (1) du module lorsque ladite surface supérieure (1) est percée au niveau de ladite marque prédéfinie (9) pour l'insertion dans ledit trou (10) desdits moyens de connexion (11).

2. Kit selon la revendication 1, **caractérisé en ce que** la surface supérieure du module (1) est une surface continue exempte de trous ou de logements en creux permettant de coopérer avec le moyen (11) destinés à connecter les éléments supplémentaires (8).

3. Kit selon la revendication 1, **caractérisé en ce que** la marque prédéfinie (9) est sensiblement sous la forme d'un cercle ou d'un point.

4. Kit selon la revendication 1, **caractérisé en ce que** l'élément de connexion (6) est de forme tubulaire avec une section transversale circulaire, est ouvert seulement au niveau de la surface inférieure du module (2), et définit un trou (10) fermé du côté de la surface supérieure du module (1).

5. Kit selon la revendication 1, **caractérisé en ce qu'**il comprend sous la surface supérieure (1) une pluralité de trous prédéfinis, qui ne sont pas visibles depuis la surface supérieure, mais sont identifiés sur ladite surface par les marques (9).

6. Kit selon la revendication 1, **caractérisé en ce que** le trou (10) de l'élément de connexion (6A) comprend un filetage.

7. Kit selon la revendication 1, **caractérisé en ce que** le trou (10) de l'élément de connexion (6A) présente des dimensions M8.

8. Procédé permettant de connecter de manière amovible des éléments supplémentaires (8), en particulier une barre de poussée, à la surface supérieure (1) d'un module selon l'une ou plusieurs des revendications précédentes, le procédé comprenant une étape initiale dans laquelle ladite surface supérieure du module (1) est percée au niveau d'au moins une marque prédéfinie (9) prévue sur la surface supérieure du module (1) jusqu'à atteindre les trous prédéfinis sous-jacents (10) définis par un élément sous-jacent (6), ledit trou (10) étant apte à coopérer avec le moyen (11) destiné à connecter de manière amovible ledit élément supplémentaire au module.

9. Procédé selon la revendication 8, **caractérisé par** l'étape consistant à former un filetage dans le trou (10) après l'étape de perçage.
